# EUROPEAN PATENT APPLICATION

(11) **EP 1 826 068 A1**
(43) Date of publication of application: **29.08.2007**
(21) Application number: 06110155.6
(22) Date of filing: 20.02.2006
(51) Int. Cl.: B60R 21/015

(54) **Seat occupancy sensor**

(71) Applicant: IEE INTERNATIONAL ELECTRONICS & ENGINEERING S.A., 6468 Echternach (LU)
(72) Inventor: Carenza, Pino, 1613 Luxembourg (LU)
(74) Representative: Beissel, Jean

(57) **Abstract**

A seat occupancy sensor for a vehicle comprises: a first connection line, a second connection line, a third connection line and a fourth connection line, each one of the connection lines including a first end for connecting the connection line to a control unit and a second end; at least one first switching element connected between the first and third connection lines; at least one second switching element connected between the first and fourth connection lines; at least one third switching element connected between the second and fourth connection lines; a first resistive element connected between the second end of the first connection line and the second end of the second connection line; and a second resistive element connected between connected between the second end of the third connection line and the second end of the fourth connection line.

## Description

### Technical field

The present invention generally relates to seat occupancy sensors for vehicles, in particular to seat occupancy sensors that can be used for occupant detection in conjunction with an airbag control module or a seat belt reminder system.

### Background Art

Seat occupancy sensors are commonly used in automotive vehicles for purposes of airbag control or other applications. In general, seat occupancy sensors present a plurality of switching elements arranged in an array configuration and distributed over the surface of the vehicle seat. The individual switching elements are typically configured as simple pressure-responsive on/off switches or as pressure sensing elements, e.g. force sensing resistors, in which, above a certain threshold force, an electrical resistance continuously varies with the force acting on the seat.

In case of airbag control, the seat occupancy sensors are used for determining the occupancy state of a vehicle seat and the airbag allocated to a given seat is only activated if the current occupancy state of the seat requires such activation. Airbag control may be limited to activating or deactivating the airbag depending on the presence, respectively the absence of a passenger on the associated seat. Advanced airbag control may further involve determining several parameters relating to the occupant, e.g. occupant weight, size, posture, etc., to specifically adapt airbag deployment to the occupant.

In a different application, the seat occupancy status determined by a seat occupancy sensor is used in a seat belt warning system that generates a warning signal if a specific vehicle seat is occupied and the corresponding seat belt is not fastened.

For switching an airbag on or off, or for the seat belt reminder function, an exact assessment of seat occupancy (e.g. passenger classification based on weight and/or size measurement) requiring a sophisticated occupant classification system, is usually not essential. For these applications it is desirable to provide a less costly, yet reliable occupancy sensor. The principal requirement to an occupancy sensor employed for switching an airbag restraint system or a seat belt reminder on or off is that it reliably detects a passenger, even a lightweight one such as e.g. a 5^{th} percentile adult female. For the seat belt reminder function, it is also important that light objects that may be placed on the front seat (bag, bottles, laptop, etc.) are not recognised as a passenger. Failure to this requirement unduly causes the seat belt warning signal to be emitted because the seat belt is usually not buckled up in such situations.

A seat occupancy sensor adapted for the use in a seat belt reminder system is e.g. disclosed in international patent application WO 2005/000637. The described sensor is specifically adapted for discriminating between a symmetrical activation of the sensor e.g. by a person sitting on the seat, and an asymmetric activation e.g. by an object resting on the seat.

An important issue in all sensor applications relating to passenger safety is sensor integrity diagnosis. Safety-critical devices are usually required to be able to test whether they are working properly. In occupancy sensors based on pressure sensing, it is often the case that an electric circuit is closed when the pressure acting on a sensing region of the sensor exceeds a certain threshold pressure. The electric circuit being open ("high resistance") may be caused as well by the seat being unoccupied or by one of the electric lines of the circuit being broken. Distinguishing between these cases is therefore of paramount importance.

### Object of the invention

lt is an object of the present invention to provide an automatically diagnosable seat occupancy sensor. This object is achieved by a sensor as claimed in claim 1.

### General Description of the Invention

According to the invention, a seat occupancy sensor for a vehicle comprises;
a first connection line, a second connection line, a third connection line and a fourth connection line, each one of the connection lines including a first end for connecting the connection line to a control unit and a second end;
at least one first switching element connected between the first and third connection lines;
at least one second switching element connected between the first and fourth connection lines;
at least one third switching element connected between the second and fourth connection lines;
a first resistive element connected between the second end of the first connection line and the second end of the second connection line; and
a second resistive element connected between connected between the second end of the third connection line and the second end of the fourth connection line.

Upon pressure acting on a switching element, the electrical resistance between the connection lines to which the switching element is connected drops significantly. A control unit connected to the first ends of the connection lines can detect this reduced resistance. The switching element can be a simple pressure-actuatable binary switch, which is open below and closed above a certain pressure threshold. Alternatively, the switching element can also be configured as a pressure sensing element, which, above a threshold pressure, has an electrical resistance that continuously decreases with increasing pressure. In order to detect whether the at least one first switching element has been activated, the resistance between the first connection line and the third connection line can be determined; in order to detect whether the at least one second switching element has been activated, the resistance between the first connection line and the fourth connection line can be determined; in order to detect whether the at least one third switching element has been activated, the resistance between the second connection line and the fourth connection line can be determined.

As will be appreciated, integrity of all the connection lines can be automatically tested. Indeed, through the provision of the resistive elements between the first and the second connection lines, a first continuous current path is formed between the first ends of these connection lines. A control unit connected to these first ends may check whether the electrical resistance of first current path corresponds to the specifications. It will be apparent to those skilled that integrity of the second current path formed by the third connection line, the second resistive element and the fourth connection line can be checked in a similar manner. The electrical resistance of the resistive elements is preferably chosen substantially higher than the resistance of a switching element in the activated state.

Those skilled will understand that there are several ways for determining a resistance of a current path, e.g. by applying a predefined voltage and measuring the resulting current or by measuring the voltage that is necessary to generate a predefined current, etc.

One major advantage of the present invention is that the routing of the connection lines can be chosen such that the connection lines do not cross each other. Therefore, it is possible to apply the connection lines on a single layer, which saves costs.

According to a preferred embodiment of the invention, the at least one first, second and/or third switching element comprises at least two first switching elements or switching cells connected in parallel. As will be appreciated, an electrically parallel connection of switching elements implements a logical OR gate: if at least one of the switching elements is activated, the electrical resistance between the connection lines to which the switching elements are connected significantly drops.

According to another preferred embodiment of the invention, the sensor further comprises;
a fifth connection line and a sixth connection line, each one including a first end for connecting the connection line to a control unit and a second end;
at least one fourth switching element connected between the third and fifth connection lines;
at least one fifth switching element connected between the fourth and sixth connection lines;
a third resistive element connected between the second end of the fifth connection line and the second end of the sixth connection line.

Those skilled will appreciate that, if necessary, more connection lines with associated switching elements and resistive elements can be added.

Preferably, the first, second and/or third resistive elements comprise a resistor and/or a diode.

Most advantageously, each one of the switching elements comprises a diode. In this case, current flowing a switching element in transmission direction of the corresponding diode encounters a low resistance, whereas current flowing in opposite direction encounters a high resistance. As will be appreciated, this allows detecting whether an unwanted short-circuit has occurred between the connection lines. Indeed, in case of such an unwanted short-circuit between two connection lines, the electrical resistance encountered by the short-circuit current is low, irrespective of the direction (polarity) of the current. To determine whether there is an unwanted short-circuit, a control unit thus can test the resistance between the first ends of two connection lines with a first polarity and then with the opposite polarity. lf the resistance is low in the two cases, it concludes to an unwanted short-circuit. lf, however, the resistance is only low for one of the two polarities, it concludes that the current flows through a switching element with a diode. This embodiment is regarded as most advantageous because both interruption of connection lines and short-circuits and short-circuits of connection lines can be detected.

For integration purposes, the sensor being of foil-type construction is considered as advantageous. Such foil-type occupancy sensors typically comprise a first and a second flexible carrier foil, made e.g. of plastic, spaced from each other by means of a spacer layer. The spacer layer is provided with openings therein, which define active zones of the occupancy sensor. When pressure acts upon an active zone, the first and second carrier foils are pressed together in the active zone, thereby establishing an electrical contact between at least two electrodes arranged in the active zone. The active zones with the electrodes arranged therein thus form pressure-responsive switching elements (switching cells). Foil-type pressure sensors have the important advantage that they can be manufactured at low production costs.

It will be appreciated, especially in case of a foil-type seat occupancy sensor, that the diodes can be printed diodes and the resistors can be printed resistors. Indeed, printing of diodes and/or resistors can be done at very competitive costs. Furthermore, such printed diodes and/or resistors do not significantly deteriorate flexibility of a foil-type sensor.

### Brief Description of the Drawings

Further details and advantages of the present invention will be apparent from the following detailed description of several not limiting embodiments with reference to the attached drawings, wherein:
- Fig. 1:: is a block schematic diagram of a preferred embodiment of an electric circuit of an occupancy sensor;
- Fig. 2:: is a block schematic diagram of a first variant of the electric circuit shown in Fig. 1;
- Fig. 3:: is a block schematic diagram of an electric circuit of an occupancy sensor with more than two pairs of connection lines;
- Fig. 4:: is a block schematic diagram of a second variant of the electric circuit represented in Fig. 1.

### Description of Preferred Embodiments

An electric circuit of an occupancy sensor is generally indicated by reference numeral 10. The electric circuit comprises a first connection line 12, a second connection line 14, a third connection line 16 and a fourth connection line 18, each provided with a first end 12.1, 14.1, 16.1, 18.1 for connecting the respective connection line to a control unit (not shown) and a second end 12.2, 14.2, 16.2, 18.2. The circuit 10 further comprises a first group 20 of pressure-responsive switching elements 20.1, 20.2 (first pressure-responsive switching elements). The first pressure-responsive switching elements 20.1, 20.2 are connected electrically in parallel between the first connection line 12 and the third connection line 16. A second group 22 of pressure-responsive switching elements 22.1, 22.2 (second pressure-responsive switching elements) are connected in parallel between the first connection line 12 and the fourth connection line 16. A third group 24 of pressure-responsive switching elements 24.1, 24.2 (third pressure-responsive switching elements) are connected in parallel between the second connection line 14 and the fourth connection line 18. A first resistive element, resistor 26.1 having electrical resistance R, is connected between the second end 12.2 of the first connection line 12 and the second end 14.2 of the second connection line 14. A second resistive element, resistor 28.1 having the electrical resistance R, is connected between the second end 16.2 of the third connection line 16 and the second end 18.2 of the fourth connection line 18. The electrical resistance R of resistors 26.1 and 28.8 is substantially higher than the resistance of the pressure-responsive switching elements 20.1, 20.2, 22.1, 22.2, 24.1, 24.2 in the activated (closed) state. It should be noted that it is not essential, but preferred, that the electrical resistance of the resistor 26.1 is equal to the electrical resistance of the resistor 28.1.

Integrity of the first and second connection lines 12 and 14 can be checked by measuring the current that passes between the first ends 12.1 and 14.1 through the resistor 26.1. Integrity of the third and fourth connection lines 16 and 18 can be checked by measuring the current that passes between the ends 16.1 and 18.1 through the resistor 28.1. If no current flows on these current paths, or if the electrical resistance of these current paths far exceeds R, one can conclude that at least one of the concerned connection lines is damaged. Those skilled will have noted that the connection lines 12, 14, 16 and 18 have no ramification between their respective first and second ends, and consequently a current cannot bypass a broken section of the connection lines 12, 14, 16, 18.

In order to determine whether a pressure-responsive switching element is activated, the following current paths are periodically probed: the path formed by the first connection line 12, the first pressure-responsive switching elements 20.1, 20.2 and the third connection line 16; the path formed by the first connection line 12, the second pressure-responsive switching elements 22.1, 22.2 and the fourth connection line 18; and the path formed by the second connection line 14, the third pressure-responsive switching elements 24.1, 24.2 and the fourth connection line 18. In practice, one measures the resistance between the concerned first ends. Those skilled will note that the presence of the resistive elements 26.1, 28.1 is required for determining which pressure-responsive switching element has been activated.

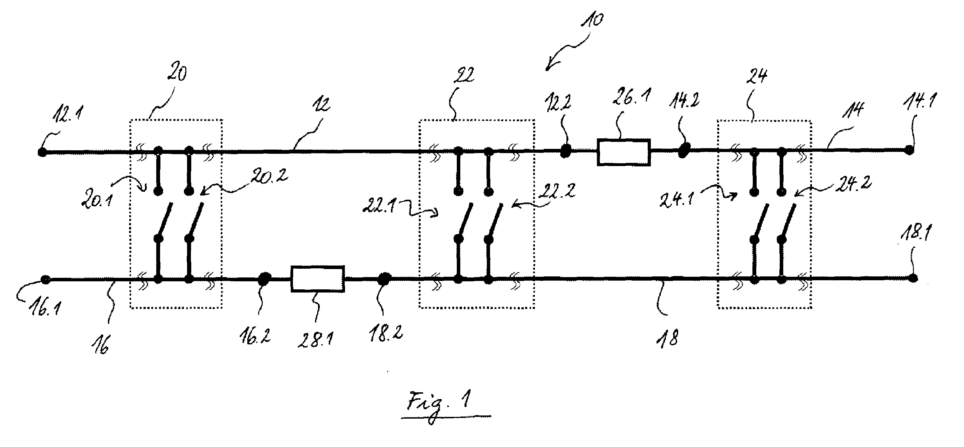

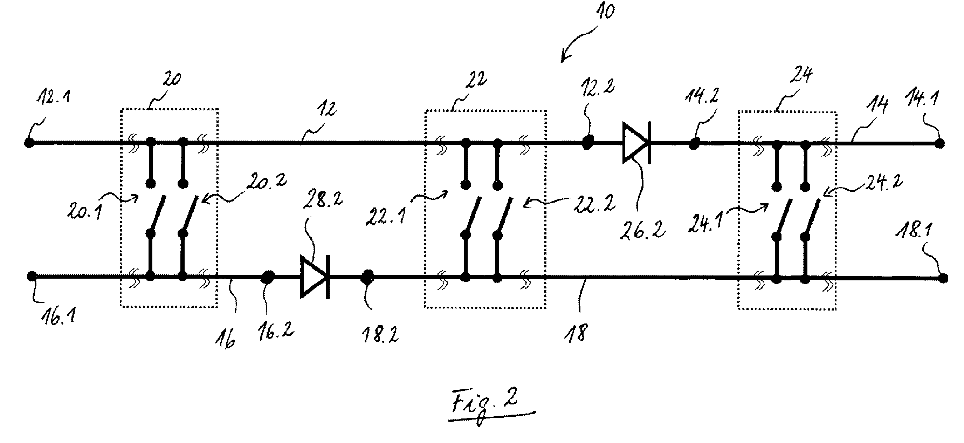

Fig. 2 shows a variant of the electric circuit 10 as illustrated in Fig. 1. In Fig. 2, the second ends 12.2 and 14.2 of the first connection line 12, respectively second connection line 14 are interconnected by a resistive element of another kind, namely a diode 26.2. Similarly, the second ends 16.2 and 18.2 of the third 16, respectively fourth connection line 18 are interconnected by diode 28.2.

Checking the integrity of the circuit of Fig. 2 is performed in a similar way as for the arrangement of Fig. 1. The polarity of the currents probing integrity, however, has to be chosen according to the transmitting direction of the diodes 26.2, 28.2. Determining which pressure-responsive switching element is activated also has to take into account the orientation of the diodes 26.2, 28.2 in the circuit. If the activation of the first pressure-responsive switching elements 20.1, 20.2 is tested, the first end 12.1 is kept at a higher potential than the first end 16.1. If the first end 12.1 is kept at a lower potential than the first end 16.1, the first pressure-responsive switching elements 20.1, 20.2 and the second pressure-responsive switching elements 22.1, 22.2 can be considered electrically parallel, so that distinguishing whether the first or the second pressure-responsive switching element has been activated is not possible. Similar considerations also hold for checking the activation of the second and third pressure-responsive switching elements. For example, for testing the activation of the second pressure-responsive switching elements, the first end 18.1 of the fourth connection line 18 is kept at higher potential than the first end 12.1 of the first connection line 12.

It should be noted that the resistive elements 26.1 and 26.2 can also be connected in series between the second end 12.2 of the first connection line 12 and the second end 14.2 of the second connection line 14. Second resistive elements 28.1 and 28.2 can be connected in series between the second end 16.2 of the third connection line 16 and the second end 18.2 of the fourth connection line 18.

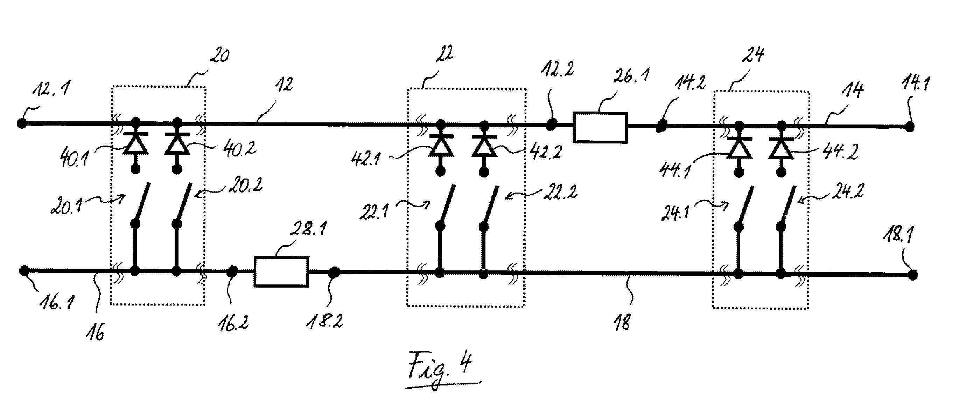

Fig. 4 shows a second variant of the electric circuit of Fig. 1. Each one of the switching elements 20.1, 20.2, 22.1, 22.2, 24.1, 24.2 comprises a diode 40.1, 40.2, 42,1, 42.2, 44.1 respectively 44.2, which is arranged in series with the corresponding pressure-responsive switch. The diodes can e.g. be configured as printed diodes. By means of the diodes 40.1, 40.2, 42,1, 42.2, 44.1, 44.2 an unwanted short-circuit between the connection lines 12 and 16, 12 and 18, 14 and 16, respectively 14 and 18 can be discriminated from an activation of one of the switching elements. In the circuit of Fig. 1, an unwanted short-circuit between, for instance, connection lines 12 and 16 cannot easily be distinguished from an activation of switching element 20.1 or 20.2. In the circuit represented in Fig. 4, however, this distinction can be made. For testing whether switching element 20.1 or 20.2 is activated, the electrical resistance of the current path between the first end 12.1 and 16.1 is measured for both polarities. If the resistance of this current path is high with the first end 12.1 at a higher potential than first end 16.1 and if the resistance of the current path is low with the first end 12.1 at a higher potential than first end 16.1 then one would conclude that the current actually passes through the diode 40.1 or 40.2. If, however the resistance of this current path is low irrespective of the sign of the potential difference between the first end 12.1 and first end 16.1 then one would conclude that there is an unwanted short-circuit between the connection lines 12 and 16. The same test can be done for the current paths between the first ends 12.1 and 18.1, 14.1 and 16.1, respectively 16.1 and 18.1.

Those skilled will note that by connecting an additional diode (not shown) in series with resistor 26.1 between the first ends 12.1 and 14.1, an unwanted short-circuit between the connection lines 12 and 14 may also be detected. An additional diode (not shown) connected in series with resistor 28.1 between the first ends 16.1 and 18.1 similarly allows the detection of an unwanted short-circuit between the connection lines 16 and 18. If the additional diodes are connected between the second ends 12.2 and 14.2, respectively the second ends 16.2 and 18.2, the orientation of the additional diode is not important. If, however, an additional diode is to be inserted into some of the connection lines, the transmission direction of the additional diode matters and a skilled artisan will choose transmission direction of the additional diode consistently with the transmission direction of the diodes of the switching elements.

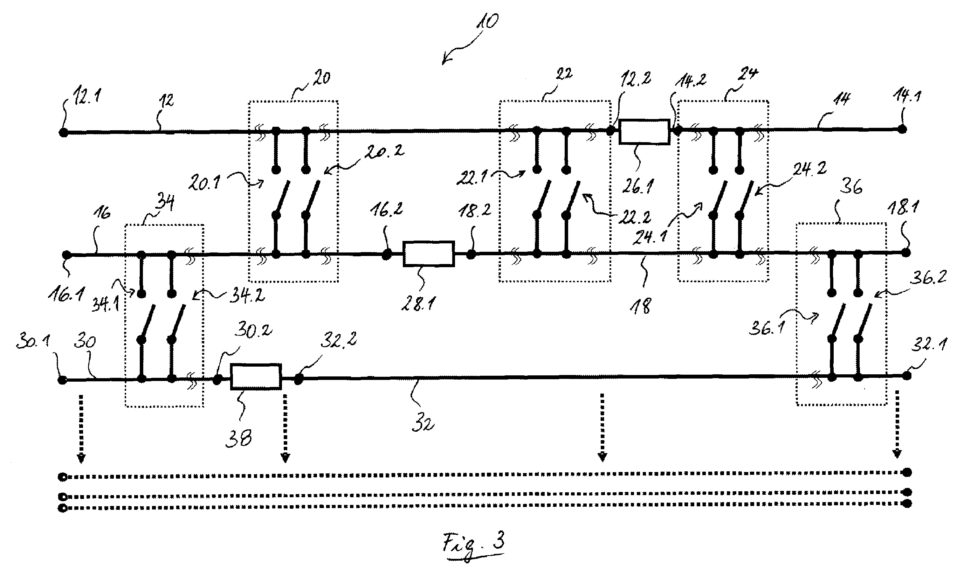

Fig. 3 illustrates how the concept of the present invention can be generalised to more than two pairs of connection lines. A fifth connection line 30 and a sixth connection line 32 have been added to a configuration as in Fig. 1. The fifth connection line 30 has a first end 30.1 for connecting it to a control unit and a second end 30.2. The sixth connection line 32 also has a first end 32.1 for connection to a control unit and a second end 32.2. A group 34 of fourth pressure-responsive switching elements 34.1, 34.2 is connected in parallel between the third connection line 16 and the fifth connection line 30. A group 36 of fifth pressure-responsive switching elements 36.1, 36.2 is connected in parallel between the fourth connection line 18 and the sixth connection line 32. A third resistive element 38 interconnects the second ends 30.2 and 32.2 of the fifth and the sixth connection lines. It should be noted that, also in case of more than two pair of connection lines, each one of the switching elements may comprise a diode, which allows detecting short-circuits.

The electric circuit 10 can be complemented by further pairs of connection lines. The connection lines of each added pair are interconnected at their second ends by a resistive element. At least one pressure-responsive switching element interconnects the first one of the connection lines of the added pair and one other connection line (different from the second one of the connection lines of the added pair). At least one pressure-responsive switching element interconnects the second one of the connection lines of the added pair and one other connection line (different from the first one of the connection lines of the added pair).

It will be apparent to persons skilled in the art that Figs. 1 to 3 serve mainly to illustrate the principles of the present invention and that an actual routing of the connection lines and the distribution of the pressure-responsive switching elements over the seating portion of a vehicle seat may substantially differ from the generally parallel arrangements shown. In the electric circuits 10 as shown in Figs. 1 to 3, the connection lines do not cross each other. It is thus possible to apply the connection lines on a single layer, e.g. on one of the carrier foils of a foil-type occupancy sensor.

It should be noted that the connection lines 12, 14, 16, 18, 30, 32 have, over their entire length, a high conductivity for the probing currents used for the integrity check or for detecting activation of a switching element. Preferably, the connection lines are continuous conductive tracks (i.e. having no resistive portions), but it is not excluded that the connection lines include diodes oriented in such a way that they do not prevent the probing currents from passing.

The different groups 20, 22, 24, 34, 36 of pressure-responsive switching elements can be associated to different regions of the vehicle seat into which the occupancy sensor is integrated. To determine whether pressure acts on a particular sensing region it has to be determined if the pressure-responsive switching element associated to this sensing region is activated, i.e. if there is a current path between the connection lines that it interconnects. In order to satisfy the requirement of robust detection of light adults on a seat, the sensing regions of occupancy sensors are preferably located in vicinity of the vertical projection of the H-point and can extend more or less symmetrically to both left and right sides of the seat. The pressure-responsive switching elements, i.e. the pressure sensing cells of the occupancy sensor, are thus located directly under both the left and right buttocks of a normally seated passenger.

As the activation of the different pressure-responsive switching elements is determined individually, a control unit connected to the sensor can determine which sensing regions and thus which portions of the seat are loaded. This knowledge may then serve to determine if the airbag and/or the seat belt reminder should be activated. It should be noted that the airbag could be activated independently from the seat belt reminder.

For instance, the airbag could be activated if at least one of the pressure-responsive switching elements is activated. In order to reduce the probability of an improper activation of the seat belt reminder warning due to an object placed on the seat, the seat belt reminder could be switched on only if pressure-responsive switching elements of at least two different sensing regions are activated.

## Claims

1. A seat occupancy sensor for a vehicle comprising;
a first connection line, a second connection line, a third connection line and a fourth connection line, each one of said connection lines including a first end for connecting said connection line to a control unit and a second end;
at least one first switching element connected between the first and third connection lines;
at least one second switching element connected between the first and fourth connection lines;
at least one third switching element connected between the second and fourth connection lines;
a first resistive element connected between the second end of said first connection line and the second end of said second connection line; and
a second resistive element connected between connected between the second end of said third connection line and the second end of said fourth connection line.

2. The sensor according to claim 1, wherein said at least one first switching element and/or said at least one second switching element and/or said at least one third switching element comprises at least two first switching elements connected in parallel.

3. The sensor according to any one of claims 1 to 4, comprising
a fifth connection line and a sixth connection line, each one including a first end for connecting said connection line to a control unit and a second end,
at least one fourth switching element connected between the third and fifth connection lines;
at least one fifth switching element connected between the fourth and sixth connection lines;
a third resistive element connected between the second end of said fifth connection line and the second end of said sixth connection line.

4. The sensor according to any one of claims 1 to 3, wherein said first, second and/or third resistive elements comprise a resistor.

5. The sensor according to any one of claims 1 to 4, wherein said first, second and/or third resistive elements comprise a diode.

6. The sensor according to any one of claims 1 to 5, said sensor being of foil-type construction.

7. The sensor according to any one of claims 1 to 6, wherein said switching elements are configured as pressure sensing elements.

8. The sensor according to any one of claims 1 to 7, wherein each one of said switching elements comprises a diode.

9. The sensor according to claim 5 or 8, wherein said diode is a printed diode.
